**Europäisches Patentamt**

**European Patent Office**

**Office européen des brevets**

(11) Veröffentlichungsnummer: **0 260 616 B1**

## (12) EUROPÄISCHE PATENTSCHRIFT

(45) Veröffentlichungstag der Patentschrift: **08.07.92**

(21) Anmeldenummer: **87113313.8**

(22) Anmeldetag: **11.09.87**

(51) Int. Cl.⁵: **C01B 25/234**

(54) Verfahren zur Behandlung von Nassverfahrensphosphorsäure.

(30) Priorität: **13.09.86 DE 3631290**

(43) Veröffentlichungstag der Anmeldung:
**23.03.88 Patentblatt 88/12**

(45) Bekanntmachung des Hinweises auf die
Patenterteilung:
**08.07.92 Patentblatt 92/28**

(84) Benannte Vertragsstaaten:
**AT BE DE FR GB IT NL SE**

(56) Entgegenhaltungen:
EP-A- 0 022 197
WO-A-80/02418
DE-A- 2 841 122
DE-B- 1 467 110
US-A- 3 328 123

PATENT ABSTRACTS OF JAPAN, (C78)[2107];
JP - A - 53 075 196 (CENTRAL GLASS)
07.04.1978

(73) Patentinhaber: **Chemische Fabrik Budenheim
Rudolf A. Oetker
Am Rhein 6
W-6501 Budenheim(DE)**

(72) Erfinder: **Beltz, Klaus, Dr.rer.nat.
Schillerstrasse 13
W-6501 Budenheim(DE)**
Erfinder: **Frankenfeld, Klaus, Dr.
Mainzer Landstrasse 48
W-6257 Hünfelden(DE)**
Erfinder: **Ruschke, Peter, Dr.
Eaubonner Strasse 56
W-6501 Budenheim(DE)**
Erfinder: **Schäfer, Heribert
Mombacher Strasse 4
W-6501 Budenheim(DE)**

**Beschreibung**

Die vorliegende Erfindung beschreibt ein Verfahren zur Behandlung von Naßverfahrensphosphorsäure. Die in der Naßverfahrensphosphorsäure suspendierten Feststoffe und Kolloide werden zusammen mit dem gelösten Arsen und den Schwermetallen an Polysulfane gebunden und als Niederschlag von der geklärten Säure abgetrennt.

Die Behandlung der Naßverfahrensphosphorsäuren wird mit den verschiedensten Zielsetzungen durchgeführt. Je nach dem vorgesehenen Verwendungszweck werden Verfahren zur Klärung der Säure, zur Verhinderung von Nachfällungen, zur Entarsenierung, zur weitergehenden Schwermetallabreicherung angewendet.

Die Arsenentfernung aus Phosphorsäure mit Schwefelwasserstoffgas bzw. Natriumsulfidlösung gehört zum Stand der Technik. In den bekannten Standard-Werken der chemischen Technik ist diese Methode beschrieben. Es wird z.B. auf die folgenden Literaturstellen hingewiesen:

Slack: Phosphoric Acid (1968), Bd. 2, S. 970/971;
Ullmann: Encyklopädie der techn. Chemie,
4. Auflage (1979), Bd. 18, S. 312, 321, 322;
Becker: Phosphates and Phosphoric Acids,
(1983), S. 433.

Nach den übereinstimmenden Beschreibungen ist der Prozeß der Arsenentfernung in mehrere Stufen gegliedert:

Die Behandlung der Phosphorsäure wird im Gegenstrom in einem Begasungsturm durchgeführt; die Grobabtrennung des ausgefällten Arsensulfides erfolgt in einem nachfolgenden Flotationsprozeß, bei dem die behandelte Säure in einen arsensulfidreichen und einen arsensulfidarmen Teilstrom aufgespalten wird. Beide Teilströme werden durch Filtration nachbehandelt. Die arsensulfidfreien Teilströme werden anschließend in einem Gegenstromprozeß vom dem überschüssigen $H_2S$-Gas befreit.

In den Naßverfahrensphosphorsäuren wird üblicherweise die Arsensulfidfällung unmittelbar nach der Gipsfiltration durchgeführt. Es wird bei Temperaturen im Bereich von 60 bis 80 °C in einer Säurekonzentration von ca. 30 % $P_2O_5$ gearbeitet. Nach den Angaben von Becker ist eine $H_2S$-Menge von 0,13 %, bezogen auf die Naßsäure (30 % $P_2O_5$), erforderlich.

Neben dem Arsen will man auch die durch $H_2S$ fällbaren Schwermetalle in den Rohsäuren reduzieren. Dazu sind eine Reihe von Veröffentlichungen bekannt geworden:

Nach der DE-A-2422 902 ist es möglich, aus höher konzentrierten Phosphorsäuren mit einem $P_2O_5$-Gehalt von mehr als 45 Gew.% unter einem Druck bis zu 50 atü und einer Verweilzeit bis zu 3 h, Cadmium aus Phosphorsäure auszufällen. Die Abtrennung des Sulfidniederschlages erfolgt durch Filtration unmittelbar nach der Druckbegasung in Gegenwart des hohen $H_2S$-Gehaltes.

In der japanischen Patentschrift 78/75.196 wird ein Verfahren zur gemeinsamen Verminderung des $SO_4$-Gehaltes und der Schwermetalle in einer 70 %igen Phosphorsäure durch die Behandlung mit Calciumhydroxyd in Verbindung mit einer wäßrigen $Na_2S$-Lösung beschrieben. Es wird ein 25-facher $H_2S$-Überschuß, berechnet auf den Schwermetallgehalt, angewendet. Nach 1 h Reaktionszeit erfolgt die Filtration der Säure.

Die schwedische Patentanmeldung 79/04.135-6 beschreibt ebenfalls eine Methode zur Reinigung der Phosphorsäure von Schwermetallen durch Sulfidfällung. Ein Teil der Schwefelsäure wird durch Calciumhydroxyd in Gips übergeführt; die freie Säure wird durch die Zugabe von Alkali abgestumpft. Die ausgefällten Sulfide werden durch Filtration aus der Säure entfernt.

Die DE-B-1097 420 beschreibt ein Verfahren zum Klären von sauren anorganischen Phosphatlösungen mit mindestens 45 % $P_2O_5$ durch die Verwendung von diversen Tallöl-, Harzsäure-und Fettsäurederivaten in Verbindung mit Alkalisilikaten. Nach einer Absitzzeit von 24 Stunden bei 60 °C werden 62 bis 82 % geklärte Säure erhalten. Bei dem Klärprozeß werden nur die suspendierten anorganischen Feststoffe erfaßt.

Die DE-C-1467 110 beschreibt ein Verfahren zum Entfärben und Klären von Phosphorsäurelösungen durch die Verwendung von einem oder mehreren Reduktionsmitteln, einem Flockungsmittel und einem oder mehreren Adsorptionsmaterialien. Das Verfahren wird vorzugsweise für Lösungen mit einem Gehalt von 10 bis 45 % $P_2O_5$ angewendet, die durch andere Verfahren von den Metallionen gereinigt worden sind und zur Natriumtripolyphosphatherstellung verwendet werden. Die Wirksamkeit des Verfahrens wird am Weißgrad des aus der behandelten Lösung hergestellten Natriumtripolyphosphates demonstriert.

Die US-A-3.328.123 beschreibt ein Verfahren zur Klärung von konzentrierter Naßsäure durch die Zugabe von Ammonium-Verbindungen zu einer Säure mit der $P_2O_5$-Konzentration im Bereich von 46 bis 65 %. In einer Absitzzeit von bis zu 14 Tagen wird eine Verminderung des Eisen- und Aluminiumgehaltes in der Säure erreicht. Die so behandelte Säure neigt nicht mehr zum Nachfallen in den Lagertanks.

In der US-A-3.338.675 wird ein ähnlicher Prozeß beschrieben wie in der US-A-3.328.123. Jedoch werden anstatt der Zugabe von Ammoniumverbindungen Kaliumverbindungen eingesetzt. Es werden vergleichbare Resultate erzielt.

Der aufgezeigte Stand der Technik zeigt eine Reihe von Nachteilen:

Die bekannten Behandlungsverfahren für Phosphorsäure stellen, wie am Beispiel der $H_2S$-Behandlung deutlich wird, technisch aufwendige Prozesse dar.

Die Klär verfahren erfordern den Einsatz zahlreicher Chemikalien in großer Menge und technischer Hilfsmittel in Verbindung mit einem langsam verlaufenden Absitzprozeß. Es verbleiben dadurch unerwünschte Fremdstoffe in der Säure.

Die Verfahren sind auf bestimmte Arten der Verunreinigungen zugeschnitten.

Überraschenderweise wurde gefunden, daß Polysulfane in hervorragender Weise zur Behandlung von Naßverfahrensphosphorsäure geeignet sind und damit die aufgezeigten Nachteile überwunden werden.

Das erfindungsgemäße Verfahren ist dadurch gekennzeichnet, daß man Naßverfahrensphosphorsäuren mit einer wäßrigen Lösung von Salzen der Polysulfane vermischt und danach den ausgefällten Niederschlag von der geklärten Säure abtrennt.

Die Verwendung von Polysulfanen zum Zwecke der Phosphorsäurebehandlung ist neu. Es war deshalb besonders überraschend, daß diese Stoffklasse nicht nur für die Klärung von Phosphorsäure geeignet ist, sondern sich damit auch in besonders einfacher Weise technische Problemstellungen der Phosphorsäurebehandlung lösen lassen. Dies betrifft die Entfernung des Arsens und der Schwermetalle, die Verminderung des Gehaltes an organischen Stoffen und die Senkung der Viskosität der Naßverfahrenssäure.

Die fällbaren Schwermetalle und das Arsen werden bei dem erfindungsgemäßen Verfahren mit den zugesetzten Polysulfanen quantitativ ausgefällt. Eine zusätzliche $H_2S$-Behandlung ist dazu nicht erforderlich.

Naßverfahrensphosphorsäuren haben je nach der Herkunft des Rohphosphates einen unterschiedlich hohen Gehalt an organischen Begleitstoffen. Es handelt sich dabei um Verbindungen, die verschiedenen Stoffklassen zuzurechnen sind.

Durch das erfindungsgemäße Verfahren werden die braun bis schwarz gefärbten hochmolekularen Verbindungen quantitativ entfernt. Je nach dem Gehalt dieser Verbindungen im Gesamtspektrum der organischen Stoffe einer Naßverfahrenssäure kann dadurch die Abreicherung bis zu 60 % des C-Gehaltes betragen.

Durch das Verfahren wird die Viskosität einer Naßverfahrenssäure abgesenkt. Die Ausfällung der suspendierten und kolloiden Stoffe führt zu einer Verminderung der Viskosität von 2 bis 8 cP-Einheiten.

Das erfindungsgemäße Verfahren hat gegenüber den bekannten $H_2S$-Fällungsverfahren für Arsen und Schwermetalle große technische Vorteile, die sich aus den physikalischen Eigenschaften der Polysulfane ableiten. Die erfindungsgemäß angewendeten Polysulfane haben als Wasserstoffverbindungen Siedepunkte, die im Temperaturbereich von 70 °C ($H_2S_2$) bis 312 °C ($H_2S_6$) liegen. Das Verfahren wird deshalb drucklos betrieben. Aufwendige Apparaturen wie in den bekannten Druckfällungsverfahren zur Arsen- und Schwermetallabscheidung sind nicht erforderlich.

Die Polysulfane liegen unter normalen Arbeitsbedingungen immer in flüssiger Form vor. Sie sind in Phosphorsäuren praktisch unlöslich. Es bilden sich bei dem Mischen mit Pbosphorsäure zwei nicht mischbare flüssige Phasen aus. Das spezifische Gewicht der Polysulfanphase ist > 1,6 kg/l, so daß die Polysulfanphase in der Regel als Bodenphase vorliegt.

Die hohe Dichte der Polysulfane, die noch durch die Reaktionsprodukte vergrößert wird, ist die Voraussetzung für eine schnelle Sedimentation der Polysulfanverbindungen nach der Behandlung der Naßverfahrenssäure.

Die Unlöslichkeit der Polysulfane in Phosphorsäure führt zur quantitativen Abscheidung der zugesetzten wasserlöslichen Polysulfansalze. Eine Nachbehandlung ist nicht erforderlich.

Erfindungsgemäß wird eine wäßrige Lösung der Polysulfansalze in eine Naßverfahrensphosphorsäure eingerührt. Bei dem Kontakt mit der Säure werden die Polysulfane als Wasserstoffverbindung in Freiheit gesetzt und fallen als unlösliche, feinverteilte Tröpfchen in der Phosphorsäure aus. In dieser Form stellen die freien Polysulfansäuren sehr reaktive Körper dar und binden alle suspendierten Kolloide und alle nach der Acidität der Phosphorsäure fällbaren Schwermetalle und Arsen. Im Verlaufe dieser Reaktionen wandeln sich die feinverteilten Tröpfchen der Polysulfansäuren in einen grobflockigen festen Niederschlag um.

Für das erfindungsgemäße Verfahren sind Polysulfidlösungen mit einer Kettenlänge von 2 bis 6 S-Gliedern erforderlich. Vorzugsweise werden Polysulfide mit einer Kettenlänge von 4 bis 6 S-Gliedern verwendet. Diese Verbindungen sind als Alkaliverbindungen im Handel verfügbar oder lassen sich auf einfache Weise herstellen.

Ein Einfluß der Kettenlänge der Polysulfane auf die Wirksamkeit des Verfahrens konnte nicht festgestellt werden. Der Grund dafür ist im chemischen Verhalten der Polysulfane begründet, die sich in Säuren zu unlöslichen längerkettigen Verbindungen mit einer Kettenlänge von 4 bis 6-S-Gliedern assoziieren.

Monomeres Sulfan, auch in Gegenwart von elementarem Schwefel, ist unwirksam.

Das Verfahren wird besonders für die Behandlung von Naßverfahrensphosphorsäuren eingesetzt, die mit der Zielsetzung einer Lösungsmittelextraktion oder der Herstellung von Reinsäure in nachfolgenden Prozeßabläufen verwendet werden.

Bei der Produktion von Reinphosphorsäure erfordert die Entfernung der organischen Stoffe und des Arsens eine besondere Aufmerksamkeit. Sowohl die organischen Stoffe als auch das Arsen folgen in dem Reinigungsprozeß der Phosphorsäure, so daß diese noch in dem Endprodukt Reinsäure vorhanden sind.

Bei der Extraktion einer nicht geklärten Naßverfahrensphosphorsäure mit organischen Lösungsmitteln sind die suspendierten Kolloidteilchen, insbesondere die hochmolekularen organischen Verbindungen. Anlaß zu ständigen Störungen im Prozeßablauf, weil sie sich als Zwischenschicht an der Phasengrenze anreichern und schließlich den Extraktionsprozeß zum Erliegen bringen.

Es war überraschend, daß diese Art der Verunreinigungen mit den Polysulfanen reagieren und als Flocken von der Phosphorsäure in einfacher Weise abgetrennt werden können.

Das erfindungsgemäße Verfahren läßt sich auf alle Konzentrationsstufen der Naßverfahren anwenden. Es ist wirksam bis hin zu $P_2O_5$-Konzentrationen über 57 %. Filtersäuren, die nach dem Dihydrat- oder Hemihydrat-Verfahren hergestellt worden sind, lassen sich gleichermaßen gut behandeln wie die hochkonzentrierten Merchant-grade-Säuren.

Die Polysulfane werden in Form ihrer löslichen Alkali-und/oder Ammoniumsalze als wäßrige Lösungen eingesetzt. Üblicherweise wird mit Lösungen mit einem Gesamt-S-Gehalt zwischen 5 bis 30 % gearbeitet.

Der Bedarf an Polysulfanen ist von der Qualität der Naßverfahrenssäure abhängig. Er richtet sich nach der Menge der fällbaren Schwermetalle und nach dem Gehalt an Kolloiden und organischen Stoffen. Der Polysulfanbedarf liegt im Bereich zwischen 0,05 bis 0,3 %, berechnet als Gesamt-S. Durch Testversuche mit steigenden Mengen wird der genaue Bedarf für jede Naßsäurespezies ermittelt.

Die Fällung wird drucklos in einem Rührreaktor durchgeführt. Die Dosierung der Polysulfanlösung erfolgt bei laufendem Rührwerk unterhalb der Flüssigkeitsoberfläche, wobei eine gleichmäßige Durchmischung erforderlich ist.

Die ausgefällten Sulfanverbindungen setzen sich nach relativ kurzer Zeit in den Absitzgefäßen ab und können als Bodenkörper aus den Settlern abgezogen werden. Es ist auch möglich, aus der behandelten Säure sofort nach dem Rühren über eine Zentrifuge den Polysulfanniederschlag abzutrennen. Die abgesessenen bzw. zentrifugierten Säuren sind frei von suspendierten Feststoffen und Kolloiden.

Die behandelten und geklärten Säuren haben keinen nennenswerten $H_2S$-Gehalt. Es werden in den behandelten Säuren $H_3S$-Mengen im Konzentrationsbereich von 0,0005 bis 0,003 % gemessen. Eine Nachbehandlung der Säure zur Entfernung des $H_2S$-Überschusses gemäß dem Stand der Technik ist nicht notwendig.

Die bei dem Betrieb des erfindungsgemäßen Verfahrens anfallenden Niederschläge hängen von der Qualität der Naßverfahrenssäure ab. Die ausgefällten Mengen haben einen Feststoffgehalt von 0,5 bis 1,5 Gew.%, bezogen auf die eingesetzte Säuremenge.

In den gewaschenen und getrockneten Niederschlägen sind folgende Analysendaten gefunden worden:

| | |
|---|---|
| $P_2O_5$ | 7 - 10 % |
| Gesamt-S | 25 - 35 % |
| HF | 8 - 15 % |
| Ca | 6 - 13 % |
| Na | 2 - 5 % |
| Mg | 0,8 - 1,5 % |
| Al | 1,5 - 3,0 % |
| Fe | 1,0 - 3,0 % |
| Cu | 1,5 - 4,0 % |
| Pb | 0,01 - 0,02 % |
| As | 0,3 - 1,2 % |
| TOC | 0,5 - 5,0 % |

Die praktische Durchführung des erfindungsgemäßen Verfahrens im technischen Maßstab erfolgt in der wie nachstehend beschriebenen Weise, ohne jedoch das Verfahren auf diese Ausführungsform zu beschränken:

In der zu behandelnden Naßverfahrensphosphorsäure wird durch eine Testreihe mit steigenden Mengen an Polysulfanen der genaue Bedarf ermittelt. Dabei dienen die verbleibenden Restgehalte an Arsen, Kupfer und organischen Stoffen in der behandelten Säureprobe als Kriterium für die Berechnung des Bedarfs.

In einem Rührreaktor wird die Naßverfahrensphosphorsäure mengenproportional mit der ermittelten Polysulfanmenge umgesetzt. Die Polysulfane werden als wasserlösliche Salze in einer Konzentration von 5 bis 30 % Gesamt-S eingesetzt, indem man die wäßrigen Lösungen in die zu behandelnde Naßverfahrenssäure einrührt.

Die so behandelte Säure kann sowohl im Chargenbetrieb als auch in kontinuierlicher Arbeitsweise aufgearbeitet werden. Im Chargenbetrieb läßt man die Säure absitzen. Die überstehende Säure wird abgezogen. Die Sedimentphase wird über eine Filterpresse oder Zentrifuge weiter aufkonzentriert.

Bei einer kontinuierlichen Arbeitsweise wird die Mischung direkt aus dem Ablauf des Rührreaktors auf eine Zentrifuge gegeben und von dem Niederschlag befreit. Es ist auch in einem Eindicker die Sedimentsphase anzureichern und ähnlich wie bei dem Chargenbetrieb weiterzuverfahren.

Die bei der Durchführung des Verfahrens anfallenden Niederschläge werden über eine Deponie entsorgt.

Beispiel 1

Eine Filtersäure, hergestellt aus Marokko-Phosphat nach dem Dihydratprozeß, wurde kontinuierlich in einem Rührreaktor mit dem vorher ermittelten Polysulfanbedarf von 0,075 % Gesamt-S in Form einer 5 %igen Ammoniumpolysulfid-Lösung versetzt. Nach einer mittleren Verweilzeit von 15 min in dem Rührreaktor wurde die Mischung in ein Absetzbecken geleitet. Die mittlere Verweilzeit betrug 2,5 h.

Es wurde kontinuierlich am Boden ein Trüblauf von 7 Vol.% des Einlaufes abgezogen und über eine Dekanterzentrifuge geklärt.

Bei dem kontinuierlichen Betrieb ergaben sich folgende Veränderungen in der Säure:

| | | unbehandelt | behandelt |
|---|---|---|---|
| $P_2O_5$ | (%) | 29,7 | 29,7 |
| As | (ppm) | 29 | < 0,1 |
| Pb | (ppm) | 1,0 | < 0,1 |
| Cu | (ppm) | 56 | < 0,1 |
| Cd | (ppm) | 9 | 8 |
| TOC | (ppm) | 348 | 136 |
| $H_2S$ | (ppm) | n.n. | < 4 |
| Viskosität (cP) $(10^{-3} Pa \cdot s)$ | | 8 | 6 |
| Feststoff (%) | | 0,68 | < 0,01 |

Beispiel 2

Eine Filtersäure, hergestellt aus Togo-Phosphat nach dem Hemihydratprozeß, wurde in einem Rührreaktor mit dem vorher ermittelten Polysulfanbedarf von 0,12 % Gesamt-S in Form einer 20 %igen Natriumpolysulfid-Lösung versetzt. Nach einer Rührzeit von 10 min wurde die Mischung in ein Absetzgefäß abgelassen. Nach einer Absitzzeit von 12 h wurde die Schlammphase von der überstehenden blanken Säure getrennt. Die Schlammphase hatte ein Volumen von 9,8 %, bezogen auf das Volumen der Rohsäure. Die Schlammphase wurde in einem Dekanter nachbehandelt.

In der behandelten Säure ergaben sich folgende Veränderungen:

|              |          | unbehandelt | behandelt |
|--------------|----------|-------------|-----------|
| $P_2O_5$     | (%)      | 42,8        | 42,7      |
| As           | (ppm)    | 23          | < 0,1     |
| Pb           | (ppm)    | 1,2         | < 0,1     |
| Cu           | (ppm)    | 53          | 0,2       |
| Cd           | (ppm)    | 35          | 32        |
| TOC          | (ppm)    | 395         | 165       |
| $H_2S$       | (ppm)    | n.n.        | 6         |
| Viskosität (cP) $(10^{-3}\ Pa \cdot s)$ |  | 16 | 13 |
| Feststoff    | (%)      | 0,7         | < 0,01    |

Beispiel 3

Eine konzentrierte Rohsäure, hergestellt aus Marokkophosphat nach dem Dihydrat-Prozeß, wurde in einem Rührreaktor vorgelegt und mit der vorher im Test ermittelten Polysulfanmenge von 0,2 % Gesamt-S in Form einer 20 %igen Natriumpolysulfid-Lösung versetzt. Nach einer Rührzeit von 10 min wurde die Mischung über eine Zentrifuge aufgetrennt. Der dabei anfallende schleuderfeuchte Niederschlag betrug 2,3 Gew.%, bezogen auf die Säuremenge.

In der behandelten Säure ergaben sich folgende Veränderungen:

|              |          | unbehandelt | behandelt |
|--------------|----------|-------------|-----------|
| $P_2O_5$     | (%)      | 54,7        | 54,6      |
| As           | (ppm)    | 11          | < 0,1     |
| Pb           | (ppm)    | 1,5         | < 0,1     |
| Cu           | (ppm)    | 26          | < 0,1     |
| Cd           | (ppm)    | 17          | 16        |
| TOC          | (ppm)    | 570         | 282       |
| $H_2S$       | (ppm)    | n.n.        | 5         |
| Viskosität (cP) $(10^{-3}\ Pa \cdot s)$ |  | 50 | 42 |
| Feststoff    | (%)      | 0,40        | < 0,01    |

**Patentansprüche**

1. Verfahren zur Behandlung von Naßverfahrensphosphorsäuren, **dadurch gekennzeichnet,** daß man Naßverfahrensphosphorsäuren mit einer wäßrigen Lösung von Salzen der Polysulfane vermischt und danach den ausgefällten Niederschlag von der geklärten Säure abtrennt.

2. Verfahren nach Anspruch 1, **dadurch gekennzeichnet,** daß die Polysulfane in Form ihrer wasserlöslichen Alkali- und/oder Ammoniumsalze eingesetzt werden.

3. Verfahren nach Anspruch 1 und 2, **dadurch gekennzeichnet,** daß die Salze der Polysulfane eine Kettenlänge von 2 bis 6 S-Gliedern, vorzugsweise von 4 bis 6 S-Gliedern, haben.

4. Verfahren nach Anspruch 1 bis 3, **dadurch gekennzeichnet,** daß die Naßverfahrensphosphorsäuren eine Konzentration von 20 bis 58 % $P_2O_5$ haben.

**Claims**

1. A process for treating wet process phosphoric acids, characterized in that wet process phosphoric acids are mixed with an aqueous solution of the salts of polysulfanes, separating thereafter the precipitate from the purified acid.

2. A process according to claim 1, characterized in that the polysulfanes are employed in the form of their watersoluble alkali and/or ammonium salts.

3. A process according to claims 1 and 2, characterized in that the salts of the polysulfanes have a chain length of between 2 and 6 S-links, preferably of between 4 and 6 S-links.

4. A process according to claims 1 to 3, characterized in that the wet process phosphoric acids are of a concentration of between 20 and 58 % $P_2O_5$.

**Revendications**

1. Procédé de traitement d'acide phosphorique obtenu par voie humide, caractérisé par le fait que l'acide phosphorique obtenu par voie humide est mélangé à une solution aqueuse de sels de polysulfanes et que l'acide purifié est séparé après la précipitation.

2. Procédé selon la revendication 1, caractérisé par le fait que les polysulfanes sont employés sous la forme de leurs sels d'alcali et/ou d'ammonium solubles à l'eau.

3. Procédé selon les revendications 1 et 2, caractérisé par le fait que les sels des polysulfanes ont une longueur de chaîne de 2 à 6 maillons S, de préférence de 4 à 6 maillons S.

4. Procédé selon les revendications 1 à 3, caractérisé par le fait que l'acide phosphorique obtenu par voie humide a une concentration de 20 à 58 % de $P_2O_5$.